(19) Europäisches Patentamt

European Patent Office

Office européen des brevets

(11) Veröffentlichungsnummer: **0 392 600 B1**

(12) **EUROPÄISCHE PATENTSCHRIFT**

(45) Veröffentlichungstag der Patentschrift: **12.07.95**

(51) Int. Cl.⁶: **B29C 67/00**, B29C 45/14

(21) Anmeldenummer: **90200819.2**

(22) Anmeldetag: **05.04.90**

(54) **Technisches Gerät, insbesondere elektromechanisches Laufwerk zum Bewegen von Informationsträgern, und Verfahren zur Herstellung von Funktionsteilen an einer Grundplatte des Gerätes.**

(30) Priorität: **11.04.89 DE 3911746**

(43) Veröffentlichungstag der Anmeldung:
**17.10.90 Patentblatt 90/42**

(45) Bekanntmachung des Hinweises auf die Patenterteilung:
**12.07.95 Patentblatt 95/28**

(84) Benannte Vertragsstaaten:
**DE FR GB IT**

(56) Entgegenhaltungen:
EP-A- 0 282 392      DE-A- 2 841 937
DE-B- 1 055 892      GB-A- 1 515 869
GB-A- 2 004 492      US-A- 3 287 071

PATENT ABSTRACTS OF JAPAN vol. 7, no. 47 (M-196)(1192)24. Februar 1983 & JP-A-57 197 139 ( HITACHI SEISAKUSHO K.K. ) 3. Dezember 1982

PATENT ABSTRACTS OF JAPAN vol. 9, no. 46 (M-360)(1769)27. Februar 1985 & JP-A-59 184 613 ( HITACHI SEISAKUSHO K.K. ) 20. Oktober 1984

(73) Patentinhaber: **Philips Patentverwaltung GmbH**
**Wendenstrasse 35c**
**D-20097 Hamburg (DE)**

(84) Benannte Vertragsstaaten:
**DE**

(73) Patentinhaber: **Philips Electronics N.V.**
**Groenewoudseweg 1**
**NL-5621 BA Eindhoven (NL)**

(84) Benannte Vertragsstaaten:
**FR GB IT**

(72) Erfinder: **Gumbert, Hans**
**Ballersbacher Weg 30**
**D-6349 Sinn/Dillkreis (DE)**

(74) Vertreter: **von Laue, Hanns-Ulrich, Dipl.-Ing. et al**
**Philips Patentverwaltung GmbH**
**Wendenstrasse 35c**
**D-20097 Hamburg (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

## Beschreibung

Die Erfindung bezieht sich auf ein technisches Gerät, insbesondere elektromechanisches Laufwerk zum Bewegen von Informationsträgern, wie Magnetbändern oder Platten, mit einer tragenden Platte aus Metall, an der in Kunststoff-Spritztechnik (Outsert-Moulding-Technik) Kunststoff-Funktionsteile gebildet sind, von denen sich jedes im Bereich wenigstens eines Plattendurchbruches festhält mittels Kunststoff-Haltestücken auf beiden Plattenoberflächen, die durch den Durchbruch hindurch mittels eines einstückig mit ihnen gebildeten Kunststoffsteges verbunden sind, und ein Verfahren zum Herstellen der Beweglichkeit eines Funktionsteiles gegenüber der tragenden Platte.

Technische Geräte, bei denen tragende Metallplatten mit aufgespritzten Kunststoffteilen versehen sind, sind bekannt. Die Fertigungstechnik derartiger tragender Platten ist unter dem Namen Outsert-Moulding-Technik bekannt. Die an der tragenden Platte gebildeten Funktionsteile dienen den verschiedensten Zwecken, wie der Halterung, der Lagerung, der Führung weiterer Funktionsteile. Die Verbindungstechnik zwischen den aufgespritzten Funktionsteilen und der tragenden Platte besteht immer darin, daß auf der Oberseite und der Unterseite der Platte im Bereich von Plattendurchbrüchen Kunststoff-Haltlestücke aufgespritzt werden, die die Ränder des Durchbruches überdecken, und daß die beiden Kunststoff-Haltestücke über einen sich durch den Durchbruch hindurch erstreckenden Kunststoffsteg verbunden sind.

Es ist bei dieser Gestaltung von tragenden Platten auch bekannt, aufgespritzte Kunststoffteile um den Kunststoffsteg drehbar auszubilden. Diese Drehbarkeit geht dabei aber nicht so weit, daß sie einer beweglichen Lagerung eines Lagers verbleichbar wäre.

Aus der JP-OS 57-197139 ist es bekannt, zwischen die Kunststoff-Haltestücke auf der einen Plattenseite und die zugehörige Plattenoberfläche ein Abstandsstück zu spritzen. Nach dem Abspritzvorgang wird dieses Abstandsstück entfernt, womit das aufgespritzte Teil lagerfähig wird. Das Einfügen und spätere Entfernen des Abstandsteils sind für eine Massenfertigung zu aufwendig.

Es ist Aufgabe der Erfindung, bei einem technischen Gerät und einer in ihm vorgesehenen, in Outsert-Moulding-Technik gebildeten tragenden Platte mit aufgespritzten Funktionsteilen die Halteverbindung mit der metallischen tragenden Platte so auszubilden, daß diese die Beweglichkeit des Funktionsteiles wie in einem Gleitlager ermöglicht, ohne den Einsatz von Abstandsstücken, die nach dem Spritzen wieder entfernt werden müssen.

Die gestellte Aufgabe ist erfindungsgemäß dadurch gelöst, daß die die Durchbruchränder überdeckenden Teile der Kunststoff-Haltestücke die überdeckten Plattenteile mit einem Spiel, das nach dem Spritzvorgang durch Verformen der Teile erhalten wurde und das größer ist als das nach dem Spritzvorgang erhaltene Schrumpfungsspiel, einschließen und daß die Beweglichkeit des entsprechenden Funktionsteiles gegenüber der Platte der eines Gleitlagers entspricht.

Auf diese Art und Weise läßt sich ein gleitlager, welches sonst zwischen dem Funktionsteil und einem weiteren Bauteil gebildet wird, einsparen. Diese Einsparung führt zu einer Verminderung der Bauhöhe, was insbesondere bei Laufwerken für Autoradios von großer Bedeutung ist.

Es gibt zwei bevorzugte Möglichkeiten der Ausbildung solcher Gleitlager, und zwar einmal die Ausbildung eines drehenden Gleitlagers und zum anderen die Ausbildung eines Schieberlagers. Zur Ausbildung eines Schieberlagers ist nach einer weiteren Ausgestaltung der Erfindung vorgesehen, daß der Druchbruch die Form eines Längsschlitzes aufweist und die Kunststoff-Haltestücke und der verbindende Kunststoffsteg nur einen Teil der Lange des Längsschlitzes überdecken. Damit kann das Funktionsteil längs des Längsschlitzes verschoben werden. Zur Ausbildung eines Drehlagers ist nach einer weiteren Ausgestaltung der Erfindung vorgesehen, daß

- der Durchbruch die Form eines Loches mit einem kreisrunden Lochrand aufweist,
- der die Kunststoffhaltestücke verbindende Kunststoffsteg eine Welle bildet.

Nach einer weiteren Ausgestaltung der Erfindung ist vorgesehen, daß

- nur das Kunststoffhaltestück auf einer Seitenfläche der tragenden Metallplatte von einer Durchbruchskante zur anderen Durchbruchskante diese überlappend durchgezogen sind,
- der durch den Durchbruch hindurchgreifende Steg aufgeteilt ist in den Durchbruchskanten benachbarter Teilstege, an die sich auf der anderen Seitenfläche der tragenden Metallplatte die die Durchbruchsränder überdeckenden Kunststoffhaltestücke unter Ausbildung von Umklammerungshaken anschließen.

Dadurch entsteht eine deutlichere Klemmerwirkung.

Nach einer weiteren Ausgestaltung der Erfindung ist vorgesehen, daß in den Teilstegen Nuten vorgesehen sind, wobei in Weiterbildung dieser Ausgestaltung vorgesehen ist, daß die Nuten parallel zur Plattenebene verlaufen. Damit ist eine Spieleinstellung in sehr weiten Grenzen möglich.

Das zu einem Gleitlager führende Spiel, das größer ist als das nach dem Spritzvorgang erhaltene Schrumpfspiel, wird nach einer weiteren Ausgestaltung der Erfindung erreicht mit Hilfe eines Verfahrens, das dadurch gekennzeichnet ist, daß nach dem Ausformen des Kunststoff-Spritzteiles an der Platte auf dieses ein Deformationsschlag ausgeübt wird, bei dem sich die überdeckenden Kunststoff-Haltestücke von den überdeckten Plattenteilen lösen. Dieser Deformationsschlag kann zu verschiedenen Zeiten ausgeführt werden, und zwar entweder noch im Spritzwerkzeug vor dem Ausformen oder außerhalb des Spritzwerkzeuges sofort nach dem Ausformen. Weiterhin ist es möglich, den Deformationsschlag nach erneutem Anwärmen durchzuführen oder je nach den Eigenschaften des Spritzmaterials auch bei kaltem Werkstück.

Zur Durchführung des Deformationsschlages ist ein Formstempel vorgesehen, der gegen das Funktionsteil gedrückt wird, während die Platte rings um eines der zu ihm gehörigen Kunststoff-Haltestücke auf einem Gegenlager aufliegt. In Weiterbildung der Vorrichtung kann der Formstempel dabei so dimensioniert sein, daß er nur innerhalb des Bereiches des Kunststoffsteges gegen das Funktionsteil drückbar ist. Ebenso kann der Formstempel Prägerippen aufweisen, die im Bereich der Druchbruchränder gegen das Funktionsteil drückbar sind.

Die Erfindung wird anhand der Zeichnung näher erläutert. Es zeigen:

Fig. 1 ein technisches Gerät, insbesondere ein Autoradio mit einem Laufwerk für bandförmige Informationsträger, geöffnet und in schaubildlicher Darstellung,

Fig. 2 im Schnitt einen Ausschnitt durch die Grundplatte des laufwerkes mit aufgespritztem Funktionsteil, schematisch angeordnet zwischen einem Formstempel und einem Gegenlager,

Fig. 3 den Schnitt nach Fig. 2 nach einem durchgeführten Deformationsschlag, wobei das dabei erhaltene künstliche Spiel zu erkennen ist,

Fig. 4 das als Schieber ausgebildete Funktionsteil nach den Fig. 1 bis 3 in Draufsicht auf die Grundplatte mit einem längeren Schlitz, auf dem das Funktionsteil als Schieber verschiebbar ist,

Fig. 5 und 6 zwei andere Deformationsgestaltungen eines Funktionsteiles mit Nuten bzw. Rippen prägenden Formstempeln,

Fig. 7a ein mit Hilfe eines runden Formstempels erzielten Gleitlagers für eine Wellenlagerung im Schnitt,

Fig. 7b die Wellenlagerung nach Fig. 7a in Draufsicht in Richtung des Pfeiles VIIb,

Fig. 8 eine Darstellung der bleibenden Deformation nach einem Deformationsavorgang mit Überbreite,

Fig. 9 eine Darstellung der Druckverhältnisse zur Erzielung der Deformation,

Fig. 10 die geometrischen Verhältnisse nach einem Deformationsvorgang mit Überlappungsbreite,

Fig. 11 eine abgewandelte Ausführungsform mit aufgeteiltem Durchdringungssteg.

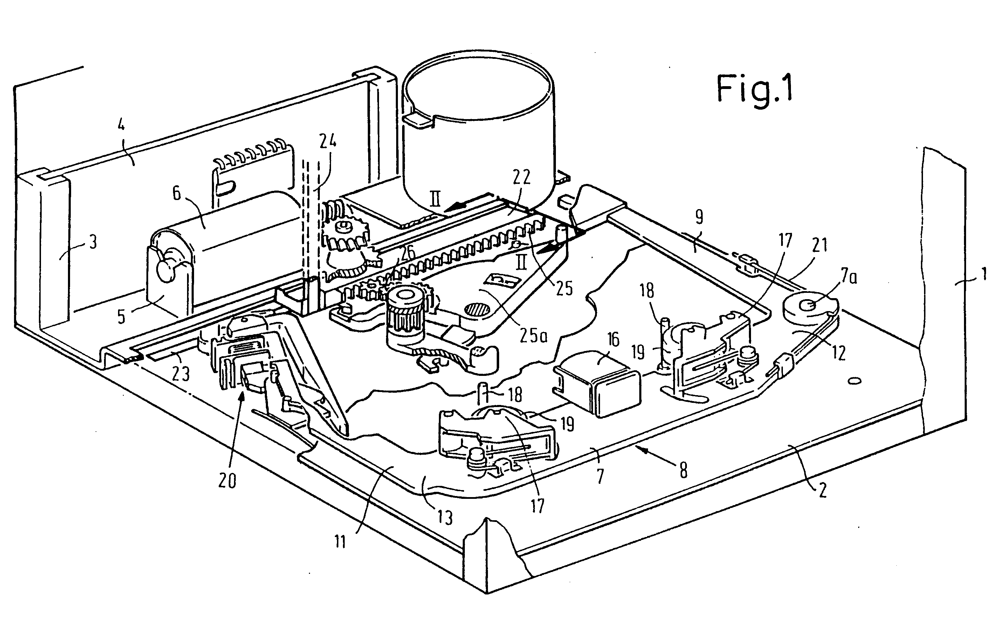

Fig. 1 zeigt in einem Gerät, beispielsweise einem Autoradio, die Grundplatte 2 eines Magnetbandkassetten-Laufwerkes, an die in Outsert-Moulding-Technik Funktionsteile 3, beispielsweise zum Tragen eines Schaltungsplatte 4 und 5 und zum Lagern eines Motors 6 angespritzt sind. Die Grundplatte hat eine Seitenfläche 2a und eine andere Seitenfläche 2b. Um einen ebenfalls angespritzten Lagerstift 7a ist eine Kopfplatte 8 verschwenkbar, an der Schenkel 9 und 11 in Eckbereichen 12 und 13 angreifen. Das Basisteil 7 der Kopfplatte trägt einen Magnetkopf 16 und über Halterungen 17 mit Tonwellen 18 zusammenwirkende Andruckrollen 19. Am Schenkel 11 ist eine Elektro-Haltemagnetvorrichtung 20 vorgesehen; mit der die Kopfplatte 8 auf nicht näher beschriebene Weise in einer Spiel- oder MSS-(Cue)-Stellung festhaltbar ist gegen die Wirkung einer Feder 21. Auch die Kopfplatte 8 kann in Outsert-Moulding-Technik hergestellt sein.

Es ist eine Steuerstange 22 vorgesehen, die von einem nicht dargestellten Kassetteneinzug längs eines Schlitzes 23 verschiebbar ist. Das Verschieben erfolgt mit Hilfe eines teilweise gestrichelt dargestellten Kupplungsgliedes 24.

Die Steuerstange 22 ist mit einer Zahnung 25 versehen, die über ein Zahnradgetriebe 26 eine Schaltvorrichtung 25a zur Steuerung der verschiedenen Laufwerksfunktionen beaufschlagt.

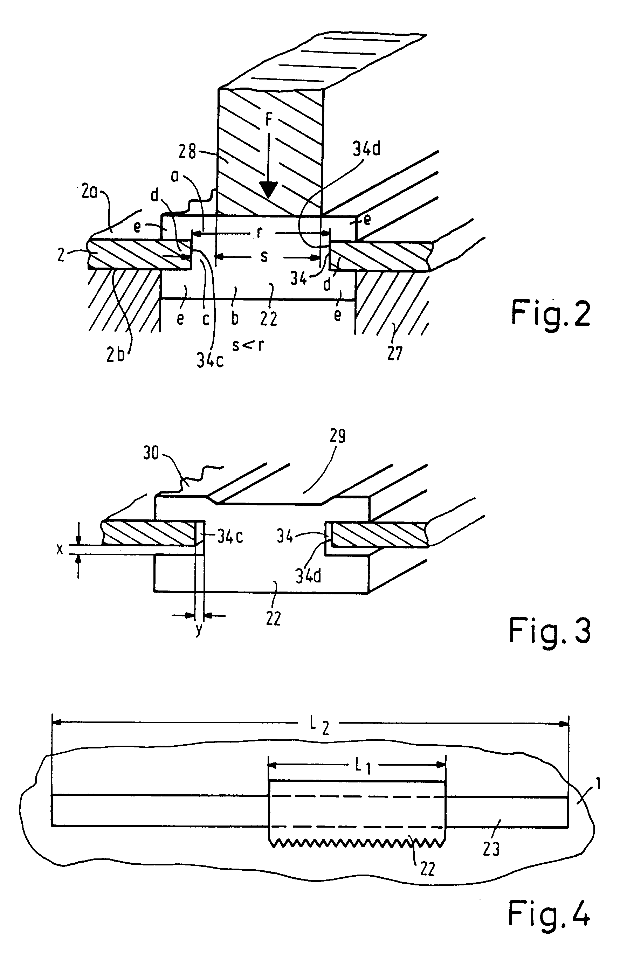

Die Steuerstange 22 st in Outsert-Moulding-Technik unmittelbar auf die metallische Grundplatte gespritzt. In Fig. 2 ist anhand eines Schnittes II-II nach Fig. 1 eine vereinfachte Darstellung der Steuerstange 22 nach dem Aufspritzen auf die Grundplatte 2 dargestellt. Bei der Darstellung nach Fig. 2 liegt der Bereich der Grundplatte 2 um die Steuerstange 22 herum auf einem Gegenlager 27 auf. Von der Oberseite her st auf die Steuerstange 22 ein Formstempel 28 aufgesetzt. Wird der Formstempel 28 in Richtung eines Pfeiles F kurz gegen die Steuerstange 22 geschlagen, dann deformiert sich die Steuerstange zu der aus Fig. 3 ersichtlichen Gestalt. Infolge einer leichten Eindrückung 29 auf der Oberseite 30 der Steuerstange hat sich im Bereich der Umspritzung der Grundplattenränder 31 sowohl ein Spiel x parallel zur Ebene der Grundplatte 2 als auch ein Spiel y senkrecht zur Grundplatte 2 ausgebildet. Die Steuerstange 22 ist damit auf der Grundplatte 2 mit einem größeren Spiel gehalten als es nach dem Spritzvorgang ohne Deformation durch evtl. Materialschrumpfung der Fall gewesen wäre. Dieses Spiel x/y führt zu einer Art Gleitlagerung der Steuerstange 22 auf der Grundplatte 2.

Aus Fig. 4, die nur den Längsschlitz 23 und die Steuerstange 22 nach Fig. 1 zeigt, ist zu ersehen, daß die Steuerstange 22 mit ihrer axialen Länge $L_1$

wesentlich kürzer ist als der Längsschlitz 23, der mit $L_2$ angegeben ist. Durch die Einführung des gezielten Spieles zwischen der Grundplatte 2 und der Steuerstange 22 ist diese leicht auf der Grundplatte 2 längs des Längsschlitzes 23 verschieblich.

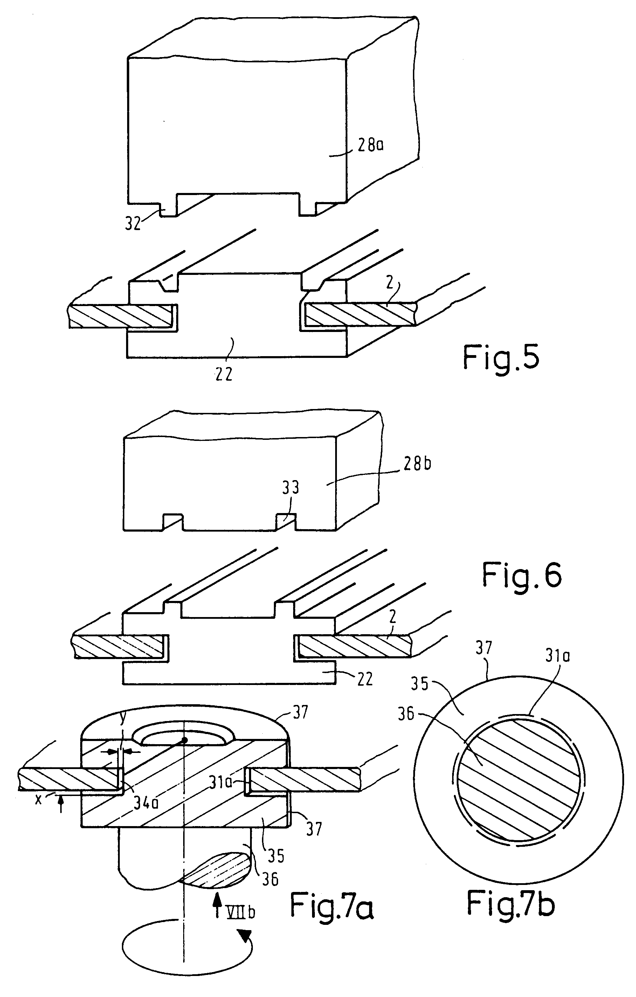

Fig. 5 und 6 zeigen Varianten der Formstempel-Ausbildung mit Formstempeln 28a und 28b. Der Formstempel 28a weist vorstehende Leisten 32 auf und der Formstempel 28b eingezogene Nuten 33. Durch die Anordnung der Nuten 33 oder der Leisten 32 wird es möglich, bestimmte gewünschte Deformationsverhältnisse im Bereich der Ränder 34c, 34d der Durchbrüche 34 der Grundplatte 2 zu erhalten.

Die Fig. 7a und 7b zeigen eine Abwandlung der Gleitlager-Ausbildung, wobei der Durchbruch 34a einen kreisrunden Plattenrand 31a aufweist. Nach der Deformation ergeben sich wieder dem Verschiebespiel dienende Spalte xy, mit denen beispielsweise in einem Lagerkörper 35 eine Welle 36 gelagert werden kann. Der Außenumfang 37 der Lagerung 35 ist aus Fig. 7b zu erkennen. Gestrichelt ist in Fig. 7b der Durchbruchrand 31a, zentral ist in Fig. 7b die angeschnittene Welle 36 dargestellt.

Bei den dargestellten Figuren handelt es sich um die Ausbildung von beweglichen Teilen in Outsert-Moulding-Technik an einer Grundplatte. Selbstverständlich braucht die metallische Platte keine Grundplatte zu sein; sie kann ebenso eine andere Funktionsplatte innerhalb des Gerätes sein, die auch ihrerseits wieder in Outsert-Moulding-Technik gebildet ist. Als Beispiel sei die Kopfplatte 8 des Laufwerkes genannt.

Bei Konstruktionen in Outsert-Moulding-Technik wird stets so vorgegangen, daß das an die Platte angespritzte Funktionsteil, sei es die Steuerstange 22, die Welle 36 oder irgendein anderes beliebiges angespritztes Teil mit zwei Kunststoff-Haltestücken a und b versehen ist, die über einen Kunststoffsteg c, der durch den Durchbruch 34 hindurch greift, miteinander verbunden sind. Dabei gibt es von den Kunststoff-Haltestücken a überdeckte Plattenteile d und die Plattenteile d überdeckende Haltestückteile e. Nach dem Aufspritzen schrumpft der Kunststoff der Haltestücke a, b und des Kunststoffsteges c so, daß die Verbindung mit der Platte nicht völlig starr ist. Der Schrumpfungsprozeß reicht aber nicht aus, um eine gleitlagerartige Beweglichkeit herbeizuführen.

Der von den Formstempeln 28, 28a und 28b ausgeführte Deformationsschlag kann noch vor dem Ausformen des Funktionsteiles im Spritzwerkzeug ausgeübt werden. Ebenso ist es möglich, den Deformationsschlag sofort nach dem Endformen vorzunehmen. Eine weitere Möglichkeit besteht, das Funktionsteil später noch einmal anzuwärmen und dann im angewärmten Zustand den Deformationsschlag auszuführen. Abhängig von den Werkstoff-Eigenschaften kann der Deformationsschlag aber auch bei kaltem Werkstück durchgeführt werden. Auf jeden Fall führt erst der Deformationsschlag zu einer regelrechten Gleitlager-Ausbildung, bei der so viel Spiel zwischen der Platte und dem Funktionsteil geschaffen wird, daß die gewünschte Drehbeweglichkeit oder Leichtgängigkeit geschaffen ist.

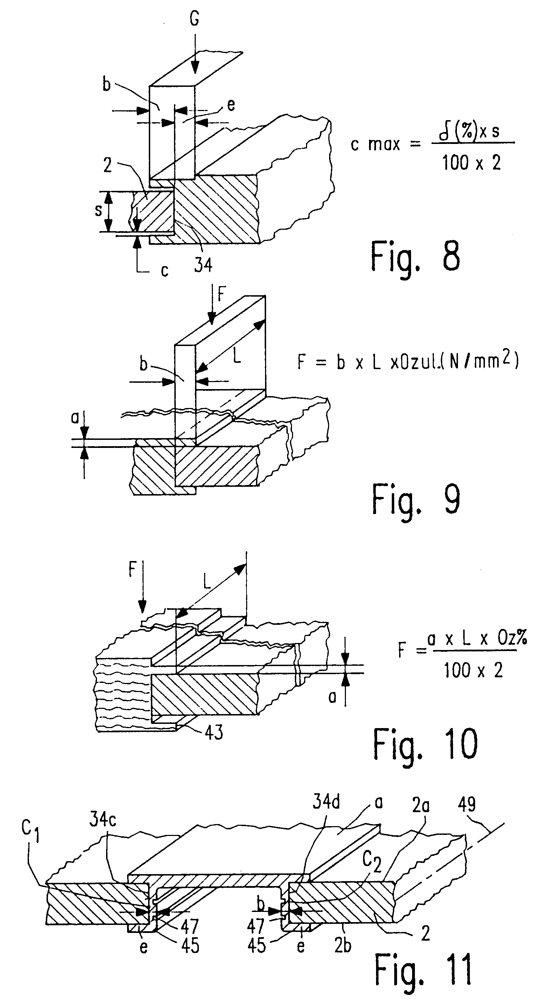

Fig. 8 zeigt das Ausmaß der Stauchung, wenn die Druckfläche G über die Durchbruchkante 34 des Metallteiles 2 hinaus erweitert ist. Es kommt zu einer Faserverschiebung im Kunststoff. Die Schrumpfung läßt sich angeben mit der Gleichung

$$c_{max} = \frac{\delta\%\ \cdot\ s}{100\ \cdot\ 2}$$

wobei

C  das erreichbare Spiel unter Berücksichtigung der Rückfederung,

δ  die Dehnfähigkeit des Kunststoffmaterials und

s  die Materialstärke des Metallmaterials ist.

Fig. 9 erläutert die Deformationsverhältnisse vor der Druckaufbringung, wenn die Durchbruchkante 34 zugleich auch die Druckkante 41 ist. Die Verhältnisse lassen sich angeben mit

$$F = b \times l \times Q_{zul}.\ (N/mm^2),$$

wobei F die Druckkraft, b die Längsdehnung des Kunststoffmaterials, l die Länge des Druckbereiches und Q die zulässige Druckfestigkeit des Kunststoffmaterials bedeuten. Der zum Freidrücken oder Freischlagen benötigte Druck richtet sich dabei nach der Größe der Fläche b x l. Bei der Druckanwendung tritt eine Verminderung der Höhe a nach Fig. 9 auf.

Fig. 10 zeigt das Ergebnis der Druckanwendung nach Fig. 9. Die Höhe a′ ist vermindert gegenüber der Höhe a nach Fig. 9. Bei der Verformung tritt eine Verschiebung bzw. Dehnung des Kunststoffes zur Kante 43 hin auf.

Bei der Ausführungsform nach Fig. 11 wird die Platte 2 von Umklammerungshaken 45 umklammert. Die Umklammerungshaken 45 bestehen aus Teilstegen $c_1$, $c_2$, an die sich die Durchbruchsränder 34c, 34d überdeckenden Kunststoffhaltestücke e anschließen. In den Teilstegen $c_1$, $c_2$ sind Nuten 47 vorgesehen, die parallel zur Plattenebene verlaufen.

Wird auf das Kunststoffhaltestück a ein Schlag ausgeübt, dann biegen sich die Teilstege $c_1$, $c_2$ mit ihren freien Enden ein wenig aufeinander zu, und die Steuerstange 22 wird gegenüber der Platte 2 verschieblich. Das Ausmaß des durch den Schlag erreichten Spieles auf der Platte 2 läßt sich durch die Schlagkraft und die Nutengebung deutlich beeinflussen.

Die Temperatur zum Schlagzeitpunkt kann innerhalb des Spritzwerkzeuges und nach dem Spritzvorgang um 20°C schwanken. Außerhalb des Spritzwerkzeuges kann die Temperatur maximal bis 5 Minuten nach dem Spritzvorgang um bis zu 100°C gegenüber der Temperatur im Spritzwerkzeug abgesunken sein.

Die Temperatur ist abhängig vom eingesetzten Werkstoff und dem verwendeten Trägermaterial, z. B. Stahl, Aluminium oder Kunststoff.

Das zu erwartende Spiel ist innerhalb der Grenzen der Dehnung des verwendeten Materials zu sehen und kann mit einer gewissen Toleranz (Rückfederung) gewählt werden.

Wenn auch Kriecheffekte nicht zu beobachten sind, so muß mit Rückbildungen unmittelbar nach dem Verformen gerechnet werden. Beim Arbeitsgang sollte dies einkalkuliert werden.

Mit der Stärke des Deformationsschlages läßt sich das benötigte Spiel nach Wunsch einstellen. Zum Einsatz kommen Thermoplaste, deren Elastizität einer Schrumpfspannung ohne Festigkeitsverlust standhält, sowie eine Dehnung nach dem Schrumpfvorgang zuläßt, wie
POM (Polyoxymethylen/Polyacethal),
ABS (Acrylonitril-Bitadien-Styrol (Copolymere)),
PA Polyamid.

**Patentansprüche**

1. Technisches Gerät, insbesondere elektromechanisches Laufwerk zum Bewegen von Informationsträgern, wie Magnetbändern oder Platten, mit einer tragenden Platte (2) aus Metall, an der in Kunststoff-Spritztechnik (Outsert-Moulding-Technik) Kunststoff-Funktionsteile (22, 36) gebildet sind, von denen sich jedes im Bereich wenigstens eines Plattendurchbruches (34) festhält mittels Kunststoff-Haltestücken (a, b) auf beiden Plattenoberflächen, die durch den Durchbruch (34) hindurch mittels eines einstückig mit ihnen gebildeten Kunststoffsteges (c) verbunden sind, dadurch gekennzeichnet, daß die die Durchbruchränder (34a, 34b) überdeckenden Teile (e) der Kunststoff-Haltestücke (a, b) die überdeckten Plattenteile (d) mit einem Spiel, das nach dem Spritzvorgang durch Verformen der Teile erhalten wurde und das größer ist als das nach dem Spritzvorgang natürlich erhaltene Spiel, einschließen, und daß die Beweglichkeit des entsprechenden Funktionsteiles (22, 36) gegenüber der Platte (2) der eines Gleitlagers entspricht.

2. Technisches Gerät nach Anspruch 1, dadurch gekennzeichnet daß
   - der Durchbruch die Form eines Längsschlitzes (23) aufweist,
   - die Kunststoffhaltestücke (a, b) und der verbindende Kunststoffsteg (c) nur einen Teil der Länge des Längsschlitzes (23) überdecken.

3. Technisches Gerät nach Anspruch 1, dadurch gekennzeichnet, daß
   - der Durchbruch (34a) die Form eines Loches mit einem kreisrunden Lochrand (31a) aufweist,
   - der die Kunststoffhaltestücke (a, b) verbindende Kunststoffsteg (c) eine Welle (36) bildet.

4. Technisches Gerät nach Anspruch 1 oder 3, dadurch gekennzeichnet, daß
   - nur das Kunststoffhaltestück (a) auf einer Seitenfläche (2a) der tragenden Metallplatte (2) von einer Durchbruchskante (34c) zur anderen Durchbruchskante (34d) diese überlappend durchgezogen sind,
   - der durch den Durchbruch (34, 34a) hindurchgreifende Steg (c, 36) aufgeteilt ist in den Durchbruchskanten (34c, 34d) benachbarter Teilstege ($c_1$, $c_2$), an die sich auf der anderen Seitenfläche (2b) der tragenden Metallplatte (2) die die Durchbruchsränder (34c, 34d) überdeckenden Kunststoffhaltestücke (e) unter Ausbildung von Umklammerungshaken (45) anschließen.

5. Technisches Gerät nach Anspruch 4, dadurch gekennzeichnet, daß in den Teilstegen ($c_1$, $c_2$) Nuten (47) vorgesehen sind.

6. Technisches Gerät nach Anspruch 5, dadurch gekennzeichnet, daß die Nuten (47) parallel zur Plattenebene (49) verlaufen.

7. Verfahren zum Herstellen eines verschieblichen Funktionsteiles (22, 34) gegenüber einer Metallplatte bei einem technischen Gerät nach Anspruch 1 bis 6, dadurch gekennzeichnet, daß nach dem Ausformen des Kunststoff-Spritzteiles (22, 34) an der Platte auf dieses ein Deformationsschlag ausgeübt wird, bei dem sich die überdeckenden Kunststoff-Haltestücke (e) von den überdeckten Plattenteilen (d) lösen.

8. Verfahren nach Anspruch 7, dadurch gekennzeichnet, daß der Deformationsschlag noch im Spritzwerkzeug vor dem Ausformen ausgeübt wird.

9. Verfahren nach Anspruch 7, dadurch gekennzeichnet, daß der Deformationsschlag sofort nach dem Entformen durchgeführt wird.

10. Verfahren nach Anspruch 7, dadurch gekennzeichnet, daß der Deformationsschlag nach erneutem Anwärmen durchgeführt wird.

11. Verfahren nach Anspruch 7, dadurch gekennzeichnet, daß der Deformationsschlag abhängig vom Spritzwerkzeug bei kaltem Werkstück durchgeführt wird.

**Claims**

1. A technical device, particularly an electromechanical deck for moving information carriers, such as magnetic tapes or disks, the device having a metal supporting plate (2), on which plastics function parts (22, 36) are formed by injection-moulding (outsert moulding), which parts are each retained at the location of at least one hole (34) in the plate by means of plastics retaining elements (a, b) at both plate surfaces, which retaining elements are connected through the hole (34) by means of a plastics bridge element (c) formed integrally with them, characterised in that those parts (e) of the plastics retaining elements (a, b) which overlap the edges (34a, 34b)) of the hole enclose the overlapped parts (d) of the plate with a clearance which is obtained after the injection-moulding process by deformation of the parts and which is greater than the clearance naturally obtained after the injection-moulding process, and the mobility of the corresponding function part (22, 36) relative to the plate (2) corresponds to that of a sliding bearing.

2. A technical device as claimed in Claim 1, characterised in that
   - the hole has the form of a longitudinal slot (23),
   - the plastics retaining elements (a, b) and the connecting plastics bridge element (c) overlap only part of the length of the longitudinal slot (23).

3. A technical device as claimed in Claim 1, characterised in that
   - the hole (34a) has the form of a hole with a circular edge (31a),
   - the plastics bridge element (c) connecting the plastics retaining element (a, b) forms a shaft (36).

4. A technical device as claimed in Claim 1 or 3, characterised in that
   - only the plastics retaining element (a) at one plate surface (2a) of the metal supporting plate (2) is continuous from one edge (34c) of the hole to the other edge (34d) of the hole, overlapping said edges,
   - the bridge element (c, 36) traversing the hole (34, 34a) is divided into bridge-element portions ($c_1$, $c_2$) adjacent the edges (34c, 34d) of the hole, which bridge-element portions are adjoined, at the other plate surface (2b) of the metal supporting plate (2), by the plastics retaining elements (e) overlapping the edges (34c, 34d) of the hole, thereby forming retaining hooks (45).

5. A technical device as claimed in Claim 4, characterised in that the bridge-element portions ($c_1$, $c_2$) have grooves (47).

6. A technical device as claimed in Claim 5, characterised in that the grooves (47) extend parallel to the plane (49) of the plate.

7. A method of manufacturing a movable function part (22, 34) in relation to a metal plate in a technical device as claimed in Claims 1 to 6, characterised in that after the moulded plastics part (22, 34) on the plate has been removed from the moulding die a deformation blow is applied to said moulded part, which blow causes the overlapping plastics retaining elements (e) to come loose of the overlapped parts (d) of the plate.

8. A method as claimed in Claim 7, characterised in that the deformation blow is applied in the moulding die before the removal from the moulding die.

9. A method as claimed in Claim 7, characterised in that the deformation blow is applied immediately after removal from the moulding die.

10. A method as claimed in Claim 7, characterised in that the deformation blow is applied after renewed heating.

11. A method according as claimed in Claim 7, characterised in that, depending on the moulding die, the deformation blow is applied while the workpiece is cold.

**Revendications**

1.  Dispositif technique, en particulier mécanisme d'entraînement électromécanique pour déplacer des supports d'information tels que des bandes magnétiques ou des disques, comportant une plaque de support (2) en métal sur laquelle des pièces fonctionnelles (22, 36) en matière plastique sont formées par une technique de moulage par injection de matière plastique (technique de moulage Outsert), pièces qui sont chacune maintenues, au voisinage d'au moins une ouverture (34) de la plaque, à l'aide de pièces de retenue en matière plastique (a, b) sur les deux surfaces de la plaque, ces deux pièces de retenue étant reliées à travers l'ouverture (34) de la plaque à l'aide d'une barrette en matière plastique (c) venue d'un seul tenant avec les deux pièces, caractérisé en ce que les parties (e) des pièces de retenue en matière plastique (a, b) chevauchant les bords (34a, 34b) de l'ouverture enserrent les parties (d) de la plaque chevauchées avec un jeu qui a été obtenu après l'opération d'injection par déformation des parties et qui est plus grand que le jeu de retrait obtenu après l'opération d'injection et que la mobilité de la pièce fonctionnelle (22, 36) correspondante vis-à-vis de la plaque (2) correspond à celle d'un palier lisse.

2.  Dispositif technique selon la revendication 1, caractérisé en ce que :
    - l'ouverture a la forme d'une fente longitudinale (23), et
    - les pièces de retenue en matière plastique (a, b) et la barrette de liaison en matière plastique (c) ne chevauchent qu'une partie de la longueur de la fente longitudinale (23).

3.  Dispositif technique selon la revendication 1, caractérisé en ce que :
    - l'ouverture (34a) a la forme d'un orifice ayant un bord circulaire (31a), et
    - la barrette en matière plastique (c) reliant les pièces de retenue en matière plastique (a, b) forme un arbre (36).

4.  Dispositif technique selon la revendication 3, caractérisé en ce que :
    - seule la pièce de retenue en matière plastique (a) qui se trouve sur une face latérale (2a) de la plaque métallique de support (2) traverse l'ouverture d'un bord (34c) à l'autre bord (34d) de celle-ci en chevauchant ces bords, et

    - la barrette (c, 36) qui s'engage à travers l'ouverture (34, 34a) est subdivisée en des barrettes partielles adjacentes ($c_1$, $c_2$) aux bords de l'ouverture, auxquelles se raccordent, sur l'autre face latérale (2b) de la plaque métallique de support (2), les pièces de retenue en matière plastique (e) chevauchant les bords (34c, 34d) de l'ouverture en formant des crochets de pinçage (45).

5.  Dispositif technique selon la revendication 4, caractérisé en ce que dans les barrettes partielles ($c_1$, $c_2$) sont ménagées des rainures (47).

6.  Dispositif technique selon la revendication 5, caractérisé en ce que lesdites rainures (47) s'étendent parallèlement au plan (49) de la plaque.

7.  Procédé de fabrication d'une pièce fonctionnelle mobile (22, 34) par rapport à une plaque métallique dans un dispositif technique selon les revendications 1 à 6, caractérisé en ce que, après le démoulage de la partie moulée par injection en matière plastique (22, 34) sur la plaque, on soumet celle-ci à une frappe de déformation telle que les pièces de retenue en matière plastique chevauchantes (e) se dégagent des parties chevauchées (d) de la plaque.

8.  Procédé selon la revendication 7, caractérisé en ce que la frappe de déformation est effectuée à l'intérieur de l'outil d'injection encore avant le démoulage.

9.  Procédé selon la revendication 7, caractérisé en ce que la frappe de déformation est effectuée immédiatement après le démoulage.

10. Procédé selon la revendication 7, caractérisé en ce que la frappe de déformation est effectuée après un réchauffement.

11. Procédé selon la revendication 7, caractérisé en ce que la frappe de déformation est effectuée, en fonction de l'outil d'injection, sur une pièce froide.

Fig.1

Fig.2

Fig. 3

Fig.4

28a

32

22

Fig.5

28b

33

Fig.6

2

22

37

35

36

31a

34a

31a

37

35

36

x

VIIb

Fig.7a

Fig.7b

$$c\ max = \frac{\delta(\%) \times s}{100 \times 2}$$

Fig. 8

$$F = b \times L \times Ozul. (N/mm^2)$$

Fig. 9

$$F = \frac{a \times L \times Oz\%}{100 \times 2}$$

Fig. 10

Fig. 11